# EUROPÄISCHE PATENTSCHRIFT

(11) **EP 3 397 423 B1**
(45) Veröffentlichungstag und Bekanntmachung des Hinweises auf die Patenterteilung: **24.11.2021**
(21) Anmeldenummer: 17705410.3
(22) Anmeldetag: 16.02.2017
(51) Int. Cl.: B23Q 11/00, F16F 1/26, F16F 7/10, F16F 7/116, F16F 15/03

(54) **DÄMPFUNG VON SCHWINGUNGEN EINER MASCHINE**
DAMPING OF VIBRATIONS OF A MACHINE TOOL
AMORTISSEMENT D'OSCILLATIONS D'UNE MACHINE-OUTIL

(30) Priorität: 16.02.2016 EP 16155902
(43) Veröffentlichungstag der Anmeldung: 07.11.2018
(73) Patentinhaber: Siemens Aktiengesellschaft, 80333 München (DE)
(72) Erfinder: HASCHKA, Markus Stephan, 76137 Karlsruhe (DE); SCHÄFERS, Elmar, 90763 Fürth (DE); SCHÜR, Torsten, 91058 Erlangen (DE); STOIBER, Dietmar, 90763 Fürth (DE)
(86) Internationale Anmeldenummer: PCT/EP2017/053472
(87) Internationale Veröffentlichungsnummer: WO 2017/140760

(56) Entgegenhaltungen:
- JP-A- H0 658 368
- JP-A- 2002 061 703
- US-A- 4 710 656
- US-A1- 2007 243 033
- US-A1- 2015 219 176

## Beschreibung

Die Erfindung betrifft eine Vorrichtung zur Dämpfung von Schwingungen einer Maschine und eine Werkzeugmaschine. Eine derartige Vorrichtung kann bei schwingungserzeugenden Fertigungsprozessen, z.B. bei spanenden Prozessen, zum Einsatz kommen. Ein Einsatz bei schwingungserzeugenden Antriebsmaschinen, wie Elektromotoren, ist ebenso denkbar. Eine Werkzeugmaschine mit einer erfindungsgemäßen Vorrichtung kann bei vielen Fertigungsprozessen, insbesondere bei spanenden Fertigungsprozessen, zum Einsatz kommen. Die durch den Betrieb der Maschine bzw. Werkzeugmaschine ausgelösten Schwingungen sind unerwünscht und führen zu einer verringerten Produktivität. Zu diesen unerwünschten Schwingungen zählt unter anderem das so genannte Rattern.

Aus EP 2 174 748 A1 ist eine Werkzeugmaschine bekannt, die ein Maschinenelement aufweist, das mittels eines ersten Motors in einer Verfahrrichtung über ein Getriebe verfahrbar ist, wobei die Werkzeugmaschine einen zweiten Motor aufweist, mittels dessen eine Kraft in Verfahrrichtung des Maschinenelements auf das Maschinenelement ausübbar ist. Dabei übt der zweite Motor direkt ohne ein zwischen zweitem Motor und Maschinenelement zwischengeschaltetes Getriebe die Kraft auf das Maschinenelement aus, wobei der zweite Motor derart ansteuerbar ist, dass die von ihm erzeugte Kraft in Verfahrrichtung des Maschinenelements verlaufenden Schwingbewegungen des Maschinenelements entgegenwirkt.

Aus der US 4,710,656 A ist ein Vibrationsisolator zum Tragen einer auf einer Basis montierten Masse bekannt. Dieser umfasst mechanische Federmittel, die eine positive Steifigkeitskonstante aufweisen und elektromagnetische Kraftmittel, die eine Wirkung einer negativen Steifigkeitskonstante aufweisen. Die elektromagnetischen Kraftmittel umfassen ferner permanentmagnetische Mittel, die ein Paar axial getrennter Luftspalte beinhalten und magnetisch permeable Ankermittel, die sich zwischen den Luftspalten erstrecken und ein Paar magnetisch permeabler Vorsprünge aufweisen, die jeden der Luftspalte teilweise kurzschließen. Ferner sind elektromagnetische Spulen vorgesehen, die einen ausgewählten Abschnitt der Ankermittel umgeben, und Mittel zum selektiven Erregen der elektromagnetischen Spulen zum Erzeugen von differentiellen magnetischen Kräften über die Luftspalte hinweg und bewirken, dass sich der Anker als Reaktion auf ein Steuersignal in eine vorbestimmte Richtung bewegt, wobei ein Schwingungsisolator mit einem Eigenfrequenzgang von Null vorgesehen ist, der eine Breitbanddämpfung von Schwingungsfrequenzen aufweist.

Aufgabe dieser Erfindung ist es, eine besonders kompakte Vorrichtung anzugeben, die eine effektive und wartungsfreie Schwingungsdämpfung von Maschinen, insbesondere von Werkzeugmaschinen, ermöglicht. Weiterhin ist es Aufgabe der Erfindung eine Werkzeugmaschine anzugeben, die vorteilhaft mittels einer erfindungsgemäßen Vorrichtung gedämpft wird.

Eine Maschine kann dabei beispielsweise eine große spanabhebende Werkzeugmaschine mit einer großen Auskragungslänge sein. Das zu bedämpfende Teil der Maschine oder Werkzeugmaschine kann dabei als Maschinenelement bezeichnet werden und kann weiterhin als Maschinentisch oder weiteres Teil einer Maschine ausgeführt sein.

Die Aufgabe wird durch eine Vorrichtung gemäß Anspruch 1 sowie durch eine Werkzeugmaschine gemäß Anspruch 12 gelöst.

Die Vorrichtung weist dazu ein erstes Linearmotor-Primärteil, eine Pendelmasse, die mittels zumindest einer Tragblechanordnung derart gelagert ist, dass eine Relativbewegung der Pendelmasse entlang des ersten Linearmotor-Primärteils ausführbar ist, ein erstes Linearmotor-Sekundärteil, das derart an der Pendelmasse befestigt ist, dass die Pendelmasse mittels des ersten Linearmotor-Primärteils zur Dämpfung von Schwingungen der Maschine aktuierbar ist, ein zweites Linearmotor-Primärteil und ein zweites Linearmotor-Sekundärteil, das derart an der Pendelmasse befestigt ist, dass die Pendelmasse zusätzlich mittels des zweiten Linearmotor-Primärteils zur Dämpfung von Schwingungen der Maschine aktuierbar ist. Die Linearmotor-Primärteile sind dabei der aktive Teil des Linearmotors, der elektrisch mit Energie versorgt wird. Es handelt sich dabei also um einen Stator, wenn man einen herkömmlichen Elektromotor als Vergleich heranzieht.

Die Linearmotor-Sekundärteile sind passiv und müssen nicht mit elektrischer Energie versorgt werden. Sie können beispielsweise permanentmagnetisch aufgebaut bzw. permanenterregt sein. Die Pendelmasse ist zur Dämpfung und/oder zur Aufnahme der Schwingungen vorgesehen, die durch den Betrieb der Maschine bzw. Werkzeugmaschine entstehen. Eine Tragblechanordnung weist zumindest ein Tragblech auf, das beispielsweise von zwei Lagern gelagert wird. So kann die Pendelmasse derart beweglich gelagert werden, dass die Tragblechanordnung wartungsfrei ist und eine ausreichend hohe Beweglichkeit und Dynamik der Pendelmasse sichergestellt ist. Der Linearmotor wird nun derart angesteuert, dass er aktiv durch entsprechende Dämpfungsbewegungen den unerwünschten und zu dämpfenden Schwingungen entgegenwirkt. Dies hat gegenüber bekannten aktiven Dämpfersystemen mit herkömmlichen Lagern, z.B. hydrostatischen Lagern, den großen Vorteil, dass bei erheblicher Ersparnis von Bauraum, mindestens die gleiche Dämpfungsleistung erreicht wird und dabei die Aufhängung der Pendelmasse wartungsfrei ist.

Die Verwendung und optimierte Anordnung von zwei Linearmotoren ermöglicht es im Vergleich zu einem einzelnen Linearmotor aus dem gleichen Bauraum mehr effektive Kraft zur Dämpfung von Schwingungen zu erhalten. Dadurch wird die Anordnung, die eine bestimmte minimale Dämpfungskraft aufbringen soll, deutlich kompakter. Eine Kombination mit zumindest einer Tragblechanordnung ermöglicht somit erst eine kompakte und gleichzeitig wartungsfreie Vorrichtung. Die Tragbleche sind vorzugsweise als Metallbleche ausgeführt, können aber auch aus anderen Materialien hergestellt werden.

In einer weiteren besonders vorteilhaften Ausführungsform weist die Vorrichtung ein Positionserfassungssystem auf, das zur Erfassung einer Relativposition zumindest eines Linearmotor-Sekundärteils bezüglich des jeweiligen Linearmotor-Primärteils ausgebildet ist. Das Positionserfassungssystem ermöglicht dabei eine genaue Regelung und verbessert so die Leistungsfähigkeit der Vorrichtung.

In einer weiteren vorteilhaften Ausführungsform ist das Positionserfassungssystem derart ausgestaltet, dass es die Magnetisierung zumindest eines der Linearmotor-Sekundärteile zur Positionserfassung auswertet. Auf diese Weise kann eine Maßverkörperung eingespart werden und die Vorrichtung wird bezüglich des Bauraums weiter optimiert.

In einer weiteren Ausführungsform unterscheidet sich ein erster Luftspalt zwischen dem ersten Linearmotor-Primärteil und dem ersten Linearmotor-Sekundärteil von einem zweiten Luftspalt zwischen dem zweiten Linearmotor-Primärteil und dem zweiten Linearmotor-Sekundärteil. Berücksichtigt man nun die Anziehungskräfte in den Luftspalten der beiden Linearmotoren, so ist es besonders vorteilhaft, den Luftspalt des zweiten Linearmotors vom Luftspalt des ersten Linearmotors unterschiedlich zu wählen. Ebenso ist denkbar, dass die Linearmotoren andere Dimensionen aufweisen. Maßgeblich ist die entstehende Anziehungskraft zwischen den Linearmotorteilen, die derart gewählt werden sollte, dass die Pendelmasse stets eine Differenz-Anziehungskraft der beiden Linearmotoren erfährt und diese sich nicht gegenseitig aufheben. Damit ist es möglich, eine ausreichende Kraft in die nötige Richtung auf die Pendelmasse und damit auf die Lageranordnungen auszuüben, um eine hohe mechanische Stabilität der Pendelmasse unter Beibehaltung der kompakten Ausmaße zu erreichen.

In einer weiteren Ausführungsform unterscheidet sich der erste Luftspalt vom zweiten Luftspalt derart, dass stets eine Anziehungskraft entgegen der Tragblechanordnung wirkt. Wirkt eine Anziehungskraft entgegen der Tragblechanordnung, so erhöht das die Stabilität der Tragblechanordnung und ermöglicht einen optimierten, verschleißfreien und besonders kompakten Betrieb der Vorrichtung.

Erfindungsgemäß ist die Pendelmasse zwischen den Linearmotor-Primärteilen angeordnet. Mit dieser Anordnung lassen sich vorteilhaft mehrere Schwingungsformen überlagern und die Freiheitsgrade der Dämpfung deutlich erhöhen. Es ist denkbar, dass die Linearmotoren Dimensionen aufweisen, die sich voneinander unterscheiden. Der Vorteil, der sich aus unterschiedlichen Luftspalten bzw. Dimensionen ergibt, ist, dass die Pendelmasse so immer noch eine Differenz-Anziehungskraft der beiden Linearmotoren erfährt und diese sich nicht gegenseitig aufheben. Damit ist es möglich eine ausreichende Kraft in die nötige Richtung auf die Pendelmasse und damit die Lageranordnungen auszuüben um eine erhöhte mechanische Stabilität der Anordnung zu erreichen. Die Vorrichtung ist so bei maximaler Leistungsfähigkeit besonders kompakt.

In einer weiteren Ausführungsform weist die Vorrichtung ferner eine Regeleinrichtung auf, die zumindest einen der Linearmotoren derart ansteuert, dass die Pendelmasse den Schwingungen der Maschine entgegenwirkt. Eine derartige Regeleinrichtung kann beispielsweise in die Vorrichtung integriert werden oder Teil eines übergeordneten Regelsystems sein, das für eine Werkzeugmaschine oder andere Maschine bereits existiert. Durch die Verwendung von üblichen Linearmotoren können bestehende Regeleinrichtungen problemlos weiterverwendet werden.

In einer besonders vorteilhaften Ausführungsform weist die Vorrichtung zumindest einen Endlagenpuffer auf. Derartige Endlagenpuffer haben den großen Vorteil, dass die Vorrichtung noch kompakter ausgestaltet werden kann, da ein Anstoßen der Pendelmasse an ein Gehäuse oder an andere Bauteile durch die Endlagenpuffer verhindert wird und eine Dimensionierung der Vorrichtung entsprechend verkleinert werden kann. Der Endlagenpuffer kann dabei aus verschiedenen Kunststoffen oder Kautschuk aufgebaut sein, es sind aber auch mechanische Dämpfer und/oder Federanordnungen denkbar.

In einer weiteren Ausführungsform weist die Vorrichtung eine Führungsvorrichtung auf, die derart ausgebildet ist, dass sie eine Berührung zwischen den Linearmotorteilen verhindert. Eine solche Führungsvorrichtung kann beispielsweise als eine Nut in der Pendelmasse in Kombination mit entsprechenden Nutsteinen ausgebildet sein. Die Nutsteine könnten beispielsweise an der Vorrichtung befestigt sein und die Pendelmasse dementsprechend führen, dass ein Berühren zwischen den Linearmotorteilen untereinander und/oder mit der Pendelmasse verhindert wird. Die Führungsvorrichtung ermöglicht es, die Luftspalte weiter zu reduzieren und die Vorrichtung noch kompakter zu gestalten.

In einer weiteren Ausführungsform weist die Vorrichtung ein Gehäuse auf, wobei zumindest ein Teil der Linearmotorteile sowie die Pendelmasse innerhalb des Gehäuses angeordnet sind. Es ist ebenso denkbar, dass die gesamte Vorrichtung in das Gehäuse eingebracht wird und so separat von der Maschine bzw. der Werkzeugmaschine gefertigt und angebracht werden kann. Das Gehäuse ermöglicht eine Isolierung der Vorrichtung von der Umwelt, was sie gegen äußere Einflüsse und gegenüber menschlicher Aktion absichert und es weiterhin ermöglicht, eine derartige Vorrichtung für Nachrüstmöglichkeiten von bereits bestehenden Anlagen vorzusehen.

In einer weiteren Ausführungsform beträgt die maximale Dimension der Vorrichtung höchstens 1/10 der maximalen Dimension der Maschine, insbesondere der Werkzeugmaschine. Da die Vorrichtung besonders kompakt ausführbar ist, ist es möglich, dass die maximale Dimension der Vorrichtung höchstens 1/10 oder 10 % der maximalen Dimension der Maschine beträgt. Dies verdeutlicht, wie kompakt eine derartige Vorrichtung aufbaubar ist. Die maximale Dimension kann dabei beispielsweise die Länge oder die Breite einer Maschine sein, abhängig davon, in welcher Dimension Schwingungen gedämpft werden sollen. Weiterhin ist denkbar, dass die maximale Dimension der Vorrichtung mindestens 20 cm, höchstens aber 80 cm beträgt. Eine derartige Vorrichtung kann also beispielsweise eine maximale Dimension von 60 cm aufweisen, was im Vergleich zu der übrigen Maschine nur ein Bruchteil sein kann.

Die Aufgabe wird weiterhin durch eine Werkzeugmaschine aufweisend zumindest ein Werkzeug sowie eine erfindungsgemäße Vorrichtung zur Dämpfung von Schwingungen gelöst.

Im Folgenden wird die Erfindung anhand der in den Figuren dargestellten Ausführungsbeispiele näher beschrieben und erläutert. Es zeigen:
- FIG 1: eine Vorrichtung zur Dämpfung von Schwingungen einer Maschine,
- FIG 2: eine Vorrichtung im Querschnitt,
- FIG 3: eine Tragblechanordnung im Detail und
- FIG 4: eine Maschine, insbesondere eine Werkzeugmaschine, aufweisend eine Vorrichtung zur Dämpfung von Schwingungen der Maschine.

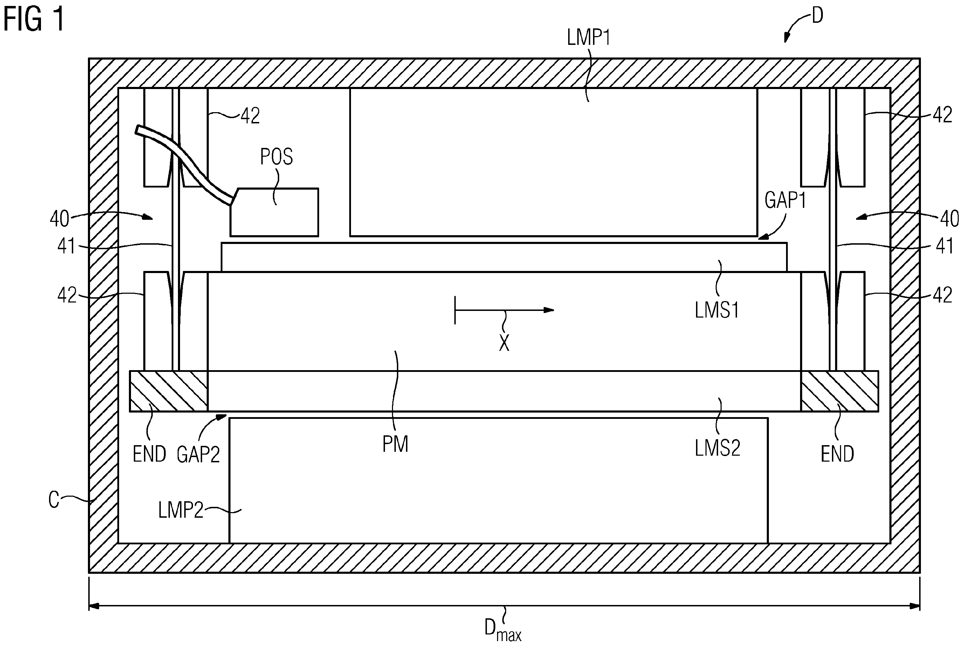

FIG 1 zeigt eine kompakte Vorrichtung D zur Dämpfung von Schwingungen einer Maschine 1, insbesondere zur Dämpfung von Schwingungen einer Werkzeugmaschine. Die Vorrichtung D weist dazu einen ersten Linearmotor LMP1, LMS1, mit einem ersten Linearmotor-Primärteil LMP1 und einem ersten Linearmotor-Sekundärteil LMS1 sowie einen zweiten Linearmotor LMP2, LMS2 mit einem zweiten Linearmotor-Primärteil LMP2 und einem zweiten Linearmotor-Sekundärteil LMS2 aus. Die beiden Linearmotor-Sekundärteile LMS1, LMS2 sind dabei mit einer Pendelmasse PM, die eine Relativbewegung bezüglich der Linearmotor-Primärteile LMP1, LMP2 durchführen kann, verbunden. Die Linearmotor-Sekundärteile LMS1, LMS2 sind in die Pendelmasse PM integrierbar. Die Linearmotor-Sekundärteile LMS1, LMS2 sind dabei in dieser Ausführungsform z.B. als Anordnungen von Permanentmagneten ausgebildet. Dies ermöglicht den Einsatz eines Positionserfassungssystems POS, das direkt die Magnetisierung des ersten Linearmotor-Sekundärteils LMS1 auswertet und daraus eine Relativposition X des Linearmotor-Sekundärteils LMS1 bzw. der Pendelmasse PM bezüglich des Linearmotor-Primärteils LMP1 ermittelt. Da beide Linearmotor-Sekundärteile LMS1, LMS2 an der Pendelmasse PM befestigt sind, kann nur ein Positionserfassungssystem POS für die Relativpositionen X beider Linearmotoren verwendet werden. Die Pendelmasse PM ist dabei zur möglichst kompakten und wartungsfreien Lagerung mittels Tragblechanordnungen 40 gelagert. Die Tragblechanordnungen 40 weisen dabei Lager 42 sowie Pendelbleche 41, die in die Lager 42 eingespannt sind, auf. Aus Stabilitätsgründen ist es für die Verwendung von Tragblechanordnungen 40 sehr vorteilhaft zumindest einen Linearmotor LMP1, LMS1, LMP2, LMS2 vorzusehen, der eine Kraft entgegen den Tragblechanordnungen 40 ausübt, da die Tragblechanordnungen 40 vorzugsweise zur Aufnahme von Zugkräften ausgebildet sind. Mit einem einzelnen Linearmotor LMP1, LMS1, LMP2, LMS2 bliebe der Platz zwischen den beiden Tragblechanordnungen 40 ungenutzt. Es ist also vorteilhaft, dieses Volumen mit einem weiteren Linearmotor LMP1, LMS1, LMP2, LMS2 zu füllen. Es ergibt sich noch der weitere Vorteil, dass der obere Linearmotor eine Kraft entgegen des unteren Linearmotors auf die Pendelmasse PM ausübt und die Zugkraft des unteren Linearmotors teilweise wieder ausgleicht. Die Pendelfrequenz der Vorrichtung D ergibt sich im Wesentlichen aus der Länge der Tragblechanordnungen 40 und der resultierenden Zugkraft. Für die Applikation als Schwingungsdämpfer ist es vorteilhaft, wenn die Pendelfrequenz möglichst tief liegt. Der obere Linearmotor LMP1, LMS1 verringert die Eigenfrequenz des Pendels bzw. der Pendelmasse PM, da er die Zugkraft des unteren Linearmotors LMP2, LMS2 teilweise ausgleicht. Ein vollständiges Ausgleichen der Anziehungskraft der beiden Linearmotoren LMP1, LMS1, LMP2, LMS2 ist unerwünscht, da sich so ein unerwünschter Schwebezustand einstellen könnte. Die Schwerkraft ist bei der Dimensionierung zu berücksichtigen, ist aber im Vergleich zu den Anziehungskräften der Linearmotoren LMP1, LMS1, LMP2, LMS2 eher gering. Die Vorrichtung D kann in jedem Neigungswinkel und sogar um 180 Grad rotiert eingesetzt werden. Die Linearmotoren LMP1, LMS1, LMP2, LMS2 sind in der Lage, die Schwerkraft, die die Pendelmasse PM aus den Linearmotoren LMP1, LMS1, LMP2, LMS2 heraus bewegen würde, zu kompensieren. Dies könnte dementsprechend in einer Steuereinrichtung parametriert werden.

Um die Vorrichtung D möglichst flexibel und vor äußeren Einflüssen geschützt einsetzen zu können, weist diese ein Gehäuse C auf. Dies ermöglicht eine separate und unabhängige Positionierung der Vorrichtung D auf einer Maschine 1. Es ist aber ebenso denkbar, dass die Maschine 1 eine entsprechende Vorrichtung D aufweist, ohne dass diese ein Gehäuse C benötigt. Beispielsweise kann in der Maschine 1 bereits eine Aussparung für die Vorrichtung D vorgesehen sein. Die Vorrichtung D weist dabei eine maximale Dimension Dₘₐₓ auf. In diesem Fall ist die maximale Dimension Dₘₐₓ die Dimension, die sich in Richtung der Relativposition X erstreckt.

Um die in FIG 1 gezeigte kompakte Anordnung noch kompakter gestalten zu können, ist es möglich, die Pendelmasse PM mit Endlagenpuffer END zu versehen. Diese Endlagenpuffer END verhindern ein hartes Anschlagen der Pendelmasse PM an das Gehäuse C oder an die Maschine 1, beispielsweise wenn die Versorgungsspannung ausfällt oder ein sonstiger Fehler vorliegt.

Die in FIG 1 gezeigte Anordnung ist schematisch dargestellt und wurde der Übersichtlichkeit halber nicht so kompakt gestaltet, wie es eine reale Vorrichtung wäre. Die Linearmotoren LMP1, LMS1, LMP2, LMS2 könnten dabei den ihnen zur Verfügung stehenden Platz voll ausfüllen und zumindest einer der Linearmotoren LMP1, LMS1, LMP2, LMS2 könnte sich dabei vollständig entlang der maximale Dimension Dₘₐₓ innerhalb des Gehäuses C erstrecken. Auch ohne Gehäuse C ist es wünschenswert, den Bauraum möglichst vollständig auszufüllen.

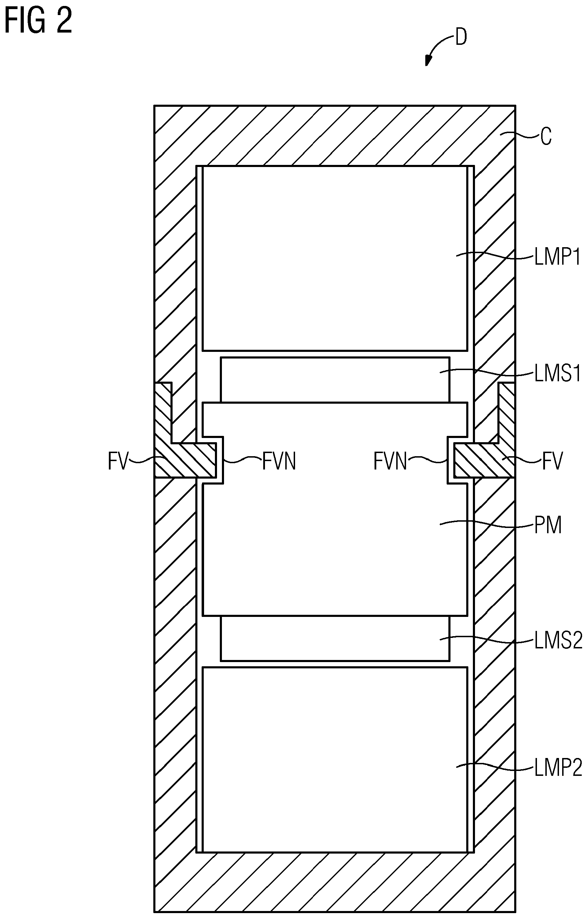

FIG 2 zeigt einen Querschnitt durch eine Vorrichtung D in einem Gehäuse C unter Verwendung der Bezugszeichen aus FIG 1. Dabei ist eine Führungsvorrichtung FV, FVN zu sehen, die in diesem Fall als zwei Nutsteine FV, die jeweils in eine Nut FVN der Pendelmasse PM eingreifen, ausgebildet ist. Die Führungsvorrichtung FV, FVN ist dabei insgesamt so ausgebildet, dass ein Wegkippen der Pendelmasse PM derart verhindert wird, dass die Linearmotor-Sekundärteile LMS1, LMS2 mit den Linearmotor-Primärteilen LMP1, LMP2 in Berührung kommen. Aufgrund der starken Anziehungskräfte zwischen den Linearmotor-Primär- und Linearmotor-Sekundärteilen LMP1, LMS1, LMP2, LMS2 wäre das Wegkippen ein unerwünschter Effekt und wird wirkungsvoll durch die Führungsvorrichtung FV verhindert.

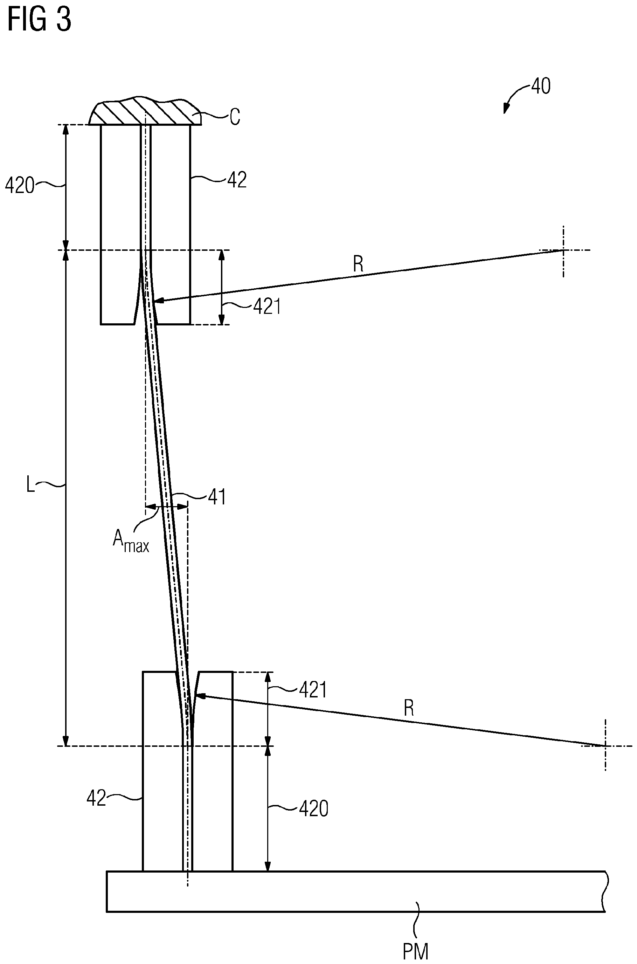

FIG 3 zeigt eine Tragblechanordnung 40 im Detail. Die entsprechenden Bezugszeichen werden analog zu FIG 1 verwendet. Die Pendelmasse PM ist am unteren Lager 42 befestigt, das über das Tragblech 41 mit einem oberhalb befestigten Lager 42 verbunden ist. Das obere Lager 42 kann dabei direkt an einem Gehäuse C befestigt sein, als ein Teil des Gehäuses C ausgebildet sein und/oder direkt an einer Maschine 1 befestigt sein. Weiterhin ist das untere der beiden Lager 42 um eine Auslenkung Aₘₐₓ ausgelenkt. Diese Auslenkung Amax soll die maximale Auslenkung darstellen, die im Betrieb der Pendelmasse PM auftritt. Weiterhin ist zu sehen, dass die Lager 42 jeweils einen Klemmbereich 420 sowie eine Biegekulisse 421 aufweisen. Der Klemmbereich 420 ist dabei als der Bereich zu verstehen, in dem das Tragblech 41 befestigt ist. Dies kann nicht nur durch Klemmen, z.B. mittels Bolzen oder Schrauben, sondern auch durch weitere bekannte Befestigungsmaßnahmen oder deren Kombinationen geschehen. Die Biegekulisse 421 ist der Bereich des Lagers 42, in dem sich das Tragblech 41 weitestgehend ohne plastische Verformung biegen kann und damit überhaupt erst die Bewegung der Pendelmasse PM ermöglicht wird. Weiterhin eingezeichnet ist die freie Länge L, die die tatsächliche schwingende Länge darstellt und damit Einfluss auf die Eigenfrequenz der Anordnung hat. Die eingezeichneten Radien R sollen die Krümmung der Biegekulisse 421 darstellen. Mit dieser Krümmung kann durch die Konstruktion der Lager 42 gesteuert werden, dass das Tragblech 41 sich nicht außerhalb vorgebbarer Anforderungen verformt. Bei diesen vorgebbaren Anforderungen kann es sich beispielsweise um maximale Biegespannungen handeln, die durch den Biegeradius entstehen können. Es ist insbesondere wünschenswert, dass die Spannungen, die im Tragblech 41 auftreten, unterhalb der Dauerfestigkeitsspannung des Tragbleches 41 bleiben.

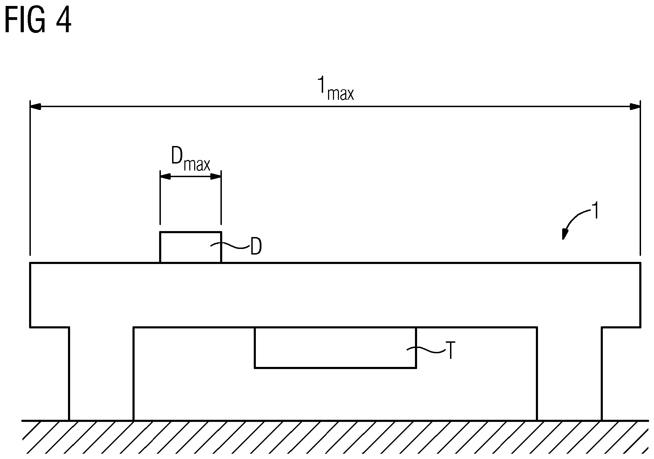

FIG 4 zeigt eine Maschine 1, in diesem Fall z.B. eine Werkzeugmaschine mit einem Werkzeug T, das in der Portalanordnung der Maschine 1 beispielsweise Vibrationen erzeugt. Zu sehen ist auch die Vorrichtung D, die diese unerwünschten Schwingungen dämpft. Die Vorrichtung D weist dabei eine maximale Dimension Dₘₐₓ auf und die Maschine 1 weist dabei eine maximale Dimension 1ₘₐₓ auf. Dabei ist denkbar, dass die Vorrichtung D nur einen Bruchteil der maximalen Dimension 1ₘₐₓ der Maschine 1 aufweist. Aufgrund der erfindungsgemäßen Merkmalskombination ermöglicht dies einen besonders kompakten und trotzdem wartungsfreien Aufbau der Vorrichtung D zur Dämpfung von Schwingungen der Maschine 1.

Zusammenfassend betrifft die Erfindung eine Vorrichtung D zur Dämpfung von Schwingungen einer Maschine 1, insbesondere zur Dämpfung von Schwingungen einer Werkzeugmaschine. Um eine besonders kompakte Vorrichtung D zu erreichen, die eine effektive und wartungsfreie Schwingungsdämpfung von Maschinen, insbesondere von Werkzeugmaschinen, ermöglicht wird eine Vorrichtung vorgeschlagen, die ein erstes Linearmotor-Primärteil LMP1, eine Pendelmasse PM, die mittels zumindest einer Tragblechanordnung 40 derart gelagert ist, dass eine Relativbewegung der Pendelmasse PM entlang des ersten Linearmotor-Primärteils LMP1 ausführbar ist, ein erstes Linearmotor-Sekundärteil LMS1, das derart an der Pendelmasse PM befestigt ist, dass die Pendelmasse mittels des ersten Linearmotor-Primärteils LMP1 zur Dämpfung von Schwingungen der Maschine aktuierbar ist, ein zweites Linearmotor-Primärteil LMP2 und ein zweites Linearmotor-Sekundärteil LMS2, das derart an der Pendelmasse PM befestigt ist, dass die Pendelmasse PM zusätzlich mittels des zweiten Linearmotor-Primärteils LMP1 zur Dämpfung von Schwingungen der Maschine 1 aktuierbar ist, aufweist. Des Weiteren betrifft die Erfindung eine Werkzeugmaschine.

## Patentansprüche

1. Vorrichtung (D) zur Dämpfung von Schwingungen einer Maschine (1), insbesondere zur Dämpfung von Schwingungen einer Werkzeugmaschine, aufweisend:
• ein erstes Linearmotor-Primärteil (LMP1),
• eine Pendelmasse (PM), die mittels zumindest einer Tragblechanordnung (40) derart gelagert ist, dass eine Relativbewegung der Pendelmasse (PM) entlang des ersten Linearmotor-Primärteils (LMP1) ausführbar ist,
• ein erstes Linearmotor-Sekundärteil (LMS1), das derart an der Pendelmasse (PM) befestigt ist, dass die Pendelmasse (PM) mittels des ersten Linearmotor-Primärteils (LMP1) zur Dämpfung von Schwingungen der Maschine (1) aktuierbar ist,
• ein zweites Linearmotor-Primärteil (LMP2), wobei die Pendelmasse (PM) zwischen den Linearmotor-Primärteilen (LMP1, LMP2) angeordnet ist und
• ein zweites Linearmotor-Sekundärteil (LMS2), das derart an der Pendelmasse (PM) befestigt ist, dass die Pendelmasse (PM) zusätzlich mittels des zweiten Linearmotor-Primärteils (LMP1) zur Dämpfung von Schwingungen der Maschine (1) aktuierbar ist.

2. Vorrichtung (D) nach Anspruch 1, ferner aufweisend ein Positionserfassungssystem (POS), das zur Erfassung einer Relativposition (X) zumindest eines Linearmotor-Sekundärteils (LMS1, LMS2) bezüglich des jeweiligen Linearmotor-Primärteils (LMP1, LMP2) ausgebildet ist.

3. Vorrichtung (D) nach Anspruch 2, wobei das Positionserfassungssystem (POS) eine Magnetisierung zumindest eines der Linearmotor-Sekundärteile (LMS1, LMS2) zur Positionserfassung auswertet.

4. Vorrichtung (D) nach Anspruch 1, 2 oder 3, wobei sich ein erster Luftspalt (GAP1) zwischen dem ersten Linearmotor-Primärteil (LMP1) und dem ersten Linearmotor-Sekundärteil (LMS1) von einem zweiten Luftspalt (GAP2) zwischen dem zweiten Linearmotor-Primärteil (LMP2) und dem zweiten Linearmotor-Sekundärteil (LMS2) unterscheidet.

5. Vorrichtung (D) nach Anspruch 4, wobei sich der erste Luftspalt (GAP1) vom zweiten Luftspalt (GAP2) derart unterscheidet, dass stets eine Anziehungskraft entgegen der Tragblechanordnung (40) wirkt.

6. Vorrichtung (D) nach einem der vorhergehenden Ansprüche, ferner aufweisend eine Regeleinrichtung (CTRL), die zumindest einen der Linearmotoren derart ansteuert, dass die Pendelmasse (PM) Schwingungen der Maschine entgegenwirkt.

7. Vorrichtung (D) nach einem der vorhergehenden Ansprüche, ferner aufweisend zumindest einen Endlagenpuffer (END).

8. Vorrichtung (D) nach einem der vorhergehenden Ansprüche, ferner aufweisend eine Führungsvorrichtung (FV), die derart ausgebildet ist, dass sie eine Berührung zwischen den Linearmotorteilen (LMP1, LMS1, LMP2, LMS2) verhindert.

9. Vorrichtung (D) nach einem der vorhergehenden Ansprüche, ferner aufweisend ein Gehäuse (C), wobei zumindest ein Teil der Linearmotorteile (LMP1, LMS1, LMP2, LMS2) sowie die Pendelmasse (PM) innerhalb des Gehäuses angeordnet sind.

10. Vorrichtung (D) nach einem der vorhergehenden Ansprüche, wobei die maximale Dimension (Dₘₐₓ) der Vorrichtung (D) höchstens 1/10 der maximalen Dimension (1ₘₐₓ) der Maschine (1), insbesondere der Werkzeugmaschine, beträgt.

11. Vorrichtung (D) nach einem der vorhergehenden Ansprüche, wobei die maximale Dimension (Dₘₐₓ) der Vorrichtung (D) mindestens 20 cm, höchstens aber 80 cm beträgt.

12. Werkzeugmaschine aufweisend zumindest ein Werkzeug (T) sowie eine Vorrichtung (D) zur Dämpfung von Schwingungen gemäß einem der Ansprüche 1 bis 11.

## Claims

1. Device (D) for damping of vibrations of a machine (1), in particular for damping of vibrations of a machine tool, having:
• A first linear motor primary part (LMP1),
• A pendulum mass (PM), which is mounted by means of at least one supporting sheet metal assembly (40) in such a way that a relative movement of the pendulum mass (PM) along the first linear motor primary part (LMP1) can be performed,
• A first linear motor secondary part (LMS1), which is fastened to the pendulum mass (PM) in such a way that the pendulum mass (PM) can be actuated by means of the first linear motor primary part (LMP1) in order to damp vibrations of the machine (1),
• A second linear motor primary part (LMP2), wherein the pendulum mass (PM) is arranged between the linear motor primary parts (LMP1, LMP2) and
• A second linear motor secondary part (LMS2), which is fastened to the pendulum mass (PM) in such a way that the pendulum mass (PM) can be actuated additionally by means of the second linear motor primary part (LMP1) in order to damp vibrations of the machine (1).

2. Device (D) according to claim 1, further having a position detection system (POS), which is embodied for detection of a relative position (X) of at least one linear motor secondary part (LMS1, LMS2) in relation to the respective linear motor primary part (LMP1, LMP2).

3. Device (D) according to claim 2, wherein the position detection system (POS) evaluates a magnetization of at least one of the linear motor secondary parts (LMS1, LMS2) for position detection.

4. Device (D) according to claim 1, 2 or 3, wherein a first air gap (GAP1) between the first linear motor primary part (LMP1) and the first linear motor secondary part (LMS1) differs from a second air gap (GAP2) between the second linear motor primary part (LMP2) and the second linear motor secondary part (LMS2).

5. Device (D) according to claim 4, wherein the first air gap (GAP1) differs from the second air gap (GAP2) in such a way that a force of attraction always acts against the supporting sheet metal assembly (40).

6. Device (D) according to one of the preceding claims, further having a controller (CTRL), which actuates at least one of the linear motors in such a way that the pendulum mass (PM) counteracts vibrations of the machine.

7. Device (D) according to one of the preceding claims, further having at least one end position buffer (END).

8. Device (D) according to one of the preceding claims, further having a guide facility (FV), which is embodied in such a way that it prevents contact between the linear motor parts (LMP1, LMS1, LMP2, LMS2).

9. Device (D) according to one of the preceding claims, further having a casing (C), wherein at least a part of the linear motor parts (LMP1, LMS1, LMP2, LMS2) and also the pendulum mass (PM) are arranged within the casing.

10. Device (D) according to one of the preceding claims, wherein the maximum dimension (Dₘₐₓ) of the device (D) amounts to at most 1/10 of the maximum dimension (1ₘₐₓ) of the machine (1), in particular of the machine tool.

11. Device (D) according to one of the preceding claims, wherein the maximum dimension (Dₘₐₓ) of the device (D) amounts to at least 20 cm, but at most 80 cm.

12. Machine tool having at least one tool (T) and also a device (D) for damping of vibrations according to one of claims 1 to 11.

## Revendications

1. Système (D) d'amortissement de vibrations d'une machine (1), notamment d'amortissement de vibrations d'une machine-outil, comportant :
• une première partie primaire de moteur linéaire (LMP1),
• une masse (PM) pendulaire, qui est montée au moyen d'au moins un agencement (40) à tôle support de manière à ce qu'un mouvement relatif de la masse (PM) pendulaire le long de la première partie primaire de moteur linéaire (LMP1) puisse être effectué,
• une première partie secondaire de moteur linéaire (LMS1), qui est fixée à la masse (PM) pendulaire de manière à pouvoir actionner la masse (PM) pendulaire au moyen de la première partie primaire de moteur linéaire (LMP1) pour amortir des vibrations de la machine (1),
• une deuxième partie primaire de moteur linéaire (LMP2), la masse (PM) pendulaire étant disposée entre les parties primaires de moteur linéaires (LMP1, LMP2) et
• une deuxième partie secondaire de moteur linéaire (LMS2), qui est fixée à la masse (PM) pendulaire de manière à pouvoir actionner la masse (PM) pendulaire en outre au moyen de la deuxième partie primaire de moteur linéaire (LMP1) pour amortir des vibrations de la machine (1).

2. Système (D) suivant la revendication 1, comportant en outre un système (POS) de détection de position, qui est constitué pour la détection d'une position (X) relative d'au moins une partie secondaire de moteur linéaire (LMS1, LMS2) par rapport à la partie primaire de moteur linéaire (LMP1, LMP2) respective.

3. Système (D) suivant la revendication 2, dans lequel le système (POS) de détection de position exploite une aimantation d'au moins l'une des parties secondaires de moteur linéaire (LMS1, LMS2) pour la détection de position.

4. Système (D) suivant la revendication 1, 2 ou 3, dans lequel un premier entrefer (GAP1) entre la première partie primaire de moteur linéaire (LMP1) et la première partie secondaire de moteur linéaire (LMS1) se distingue d'un deuxième entrefer (GAP2) entre la deuxième partie primaire de moteur linéaire (LMP2) et la deuxième partie secondaire de moteur linéaire (LMS2).

5. Système (D) suivant la revendication 4, dans lequel le premier entrefer (GAP1) se distingue d'un deuxième entrefer (GAP2) de manière à ce qu'une force d'attraction agisse toujours à l'encontre de l'agencement (40) à tôle de support.

6. Système (D) suivant l'une des revendications précédentes, comportant en outre un dispositif (CTRL) de réglage, qui commande au moins l'un des moteurs linéaires de manière à ce que la masse (PM) pendulaire s'oppose à des vibrations de la machine.

7. Système (D) suivant l'une des revendications précédentes, comportant en outre au moins un tampon (END) de position finale.

8. Système (D) suivant l'une des revendications précédentes, comportant en outre un système (FV) de guidage, qui est constitué de manière à empêcher un contact entre les parties (LMP1, LMS1, LMP2, LMS2) de moteur linéaire.

9. Système (D) suivant l'une des revendications précédentes, comportant une enveloppe (C), au moins une partie des parties (LMP1, LMS1, LMP2, LMS2) de moteur linéaire ainsi que la masse (PM) pendulaire étant disposées dans l'enveloppe.

10. Système (D) suivant l'une des revendications précédentes, dans lequel la dimension (Dₘₐₓ) maximum du système (D) représente au plus 1/10 de la dimension (1ₘₐₓ) maximum de la machine (1), notamment de la machine-outil.

11. Système (D) suivant l'une des revendications précédentes, dans lequel la dimension (Dₘₐₓ) maximum du système (D) est d'au moins 20 cm, mais d'au plus 80 cm.

12. Machine-outil comportant au moins un outil (T) ainsi qu'un dispositif (D) d'amortissement des vibrations suivant l'une des revendications 1 à 11.
